# EUROPEAN PATENT APPLICATION

(11) **EP 4 644 218 A1**
(43) Date of publication of application: **05.11.2025**
(21) Application number: 23930708.5
(22) Date of filing: 10.04.2023
(51) Int. Cl.: B62J 43/16, B62J 45/00, B62M 7/02

(54) **ELECTRIC STRADDLED VEHICLE**

(30) Priority: 24.03.2023 JP 2023047971
(71) Applicant: Yamaha Hatsudoki Kabushiki Kaisha, Iwata-shi, Shizuoka 438-8501 (JP)
(72) Inventor: MIYASHIRO, Shidehiko, Iwata-shi Shizuoka 438-8501 (JP)
(74) Representative: Grünecker Patent- und Rechtsanwälte PartG mbB
(86) International application number: PCT/JP2023/014608
(87) International publication number: WO 2024/202074

(57) **Abstract**

An electric straddled vehicle includes wheel, a motor, a battery, and a motor control unit. The motor drives the wheel. The battery is disposed above the motor. The motor control unit is disposed in front of the motor and the battery. The motor control unit overlaps with the motor and the battery in the front-rear direction of the vehicle.

## Description

### FIELD

The present invention relates to an electric straddled vehicle.

### BACKGROUND

An electric straddled vehicle in which a wheel is driven by a motor is known. The electric straddled vehicle includes a battery and a motor control unit. The battery is charged with electric power to drive the motor. The motor control unit controls the motor. For example, the electric motorcycle disclosed in Patent Document 1 includes a motor, an upper battery, a lower battery, and a PCU. The upper battery is disposed above the motor. The lower battery is disposed in front of the motor. The PCU is a motor driver and controls the motor. The PCU is disposed below the motor and the lower battery.

### CITATION LIST

### Patent Literature

[Patent Document 1] Japanese Patent No. 7121633

### SUMMARY

### Technical Problems

In the electric motorcycle described above, the PCU serving as the motor control unit is disposed in a low position under the motor and the lower battery. Therefore, when the electric motorcycle runs through water such as a puddle, there is a possibility that the electrical connection between the PCU and the battery may become wet. However, if the PCU and the battery are entirely disposed at a high position in order to place the electrical connection between the PCU and the battery at a high position, the position of the center of gravity of the vehicle will be raised. An object of the present invention is to dispose the electrical connection between the motor control unit and the battery in a high position and to lower the position of the center of gravity of the vehicle in an electric straddled vehicle.

### Solution to Problems

An electric straddled vehicle according to one aspect of the present invention includes a wheel, a motor, a battery, and a motor control unit. The motor drives the wheel. The battery is disposed above the motor. The motor control unit is disposed in front of the motor and the battery. The motor control unit overlaps with the motor and the battery in the front-rear direction of the vehicle.

In the electric straddled vehicle according to the present aspect, the motor control unit is disposed in front of the motor and the battery and overlaps with the motor and the battery in the front-rear direction of the vehicle. Therefore, the motor control unit can be disposed at a high position. This allows the electrical connection between the motor control unit and the battery to be disposed at a high position. Furthermore, the battery can be disposed at a lower position compared to when the motor control unit is disposed under the battery. This allows the position of the center of gravity of the vehicle to be lowered.

The battery may include a bottom surface and a first connector. The first connector may be electrically connected to the motor control unit. The first connector may be disposed above the bottom surface of the battery. In this case, the first connector is disposed at a high position. This prevents the first connector from getting wet.

The motor control unit may include a second connector. The second connector may be electrically connected to the battery. The second connector may be disposed above the bottom surface of the battery. In this case, the second connector is disposed at a high position. This prevents the second connector from getting wet.

The battery may include a step portion. The step portion may be disposed forward of the bottom surface. The step portion may have an upwardly concave shape. The second connector may be disposed to face the step portion. In this case, the second connector is disposed at a high position. This prevents the second connector from getting wet.

The electric straddled vehicle may further include a cable connecting the first connector and the second connector. In this case, the first connector and the second connector can be easily connected by the cable. The first connector may be plugged into the second connector from above. In this case, the first connector and the second connector can be easily connected. The first connector may be provided on the step portion. In this case, the first connector is provided at a high position while preventing the battery from being positioned too high.

The step portion may include a first surface and a second surface. The first surface may extend upwardly from the bottom surface. The second surface may extend forwardly from the first surface. The motor control unit may vertically overlap the second surface. In this case, the motor control unit and the battery are disposed compactly in the front-rear direction of the vehicle. The motor control unit may overlap the first surface in the front-rear direction of the vehicle. In this case, the position of the battery is prevented from becoming too high.

The battery may be attached to the motor. In this case, the battery and the motor, which are heavy objects, can be disposed in a low position. This allows the center of gravity of the vehicle to be lowered.

The electric straddled vehicle may further include a front wheel, a front fork, a head pipe, and a seat. The front fork may rotatably support the front wheel. The head pipe may support the front fork so as to be turnable left and right. The seat may be disposed rearward of the head pipe. The battery may be disposed under the seat.

The battery may include a battery case, a first battery module, and a second battery module. The first battery module may include a plurality of first battery cells. The first battery module may be disposed within the battery case. The second battery module may include a plurality of second battery cells. The second battery module may be disposed within the battery case. The second battery module may be disposed above the first battery module. The second battery module may be disposed offset forward relative to the first battery module. In this case, the rear part of the battery can be shaped so as to be less likely to come into contact with the rider's feet. This improves the riding comfort for the rider.

A rear surface of the second battery module may be disposed forward of a rear surface of the first battery module. In this case, the rear part of the battery can be shaped so as to be less likely to come into contact with the rider's feet. This improves the riding comfort for the rider.

At least a portion of the battery may be disposed rearward of the front end of the seat. In this case, the battery and the seat are disposed compactly in the front-rear direction.

The second battery module may have the same shape as the first battery module. In this case, compared to when the second battery module is smaller than the first battery module, the rear of the battery is prevented from coming into contact with the rider's feet, and a large battery capacity can be ensured.

The upper surface of the battery may include an inclined surface. The inclined surface may support the front edge of the sheet. In this case, the battery and the seat are disposed compactly and the seat is firmly supported.

The battery may power the motor. The motor control unit may control the motor. Advantageous Effects of Invention

According to the present invention, in an electric straddled vehicle, the electrical connection between the motor control unit and the battery is disposed in a high position, and the position of the center of gravity of the vehicle is lowered.

### BRIEF DESCRIPTION OF THE DRAWINGS

FIG. 1 is a side view of an electric straddled vehicle according to an embodiment.
FIG. 2 is a left side view of a power unit of the electric straddled vehicle.
FIG. 3 is a right side view of the power unit.
FIG. 4 is a top view of the power unit.
FIG. 5 is a front view of the power unit.
FIG. 6 is a rear view of the power unit.
FIG. 7 is an enlarged perspective view of the power unit.
FIG. 8 is a diagram showing an internal configuration of a battery of the power unit.
FIG. 9 is a left side view of a power unit according to a modified example.

### DETAILED DESCRIPTION

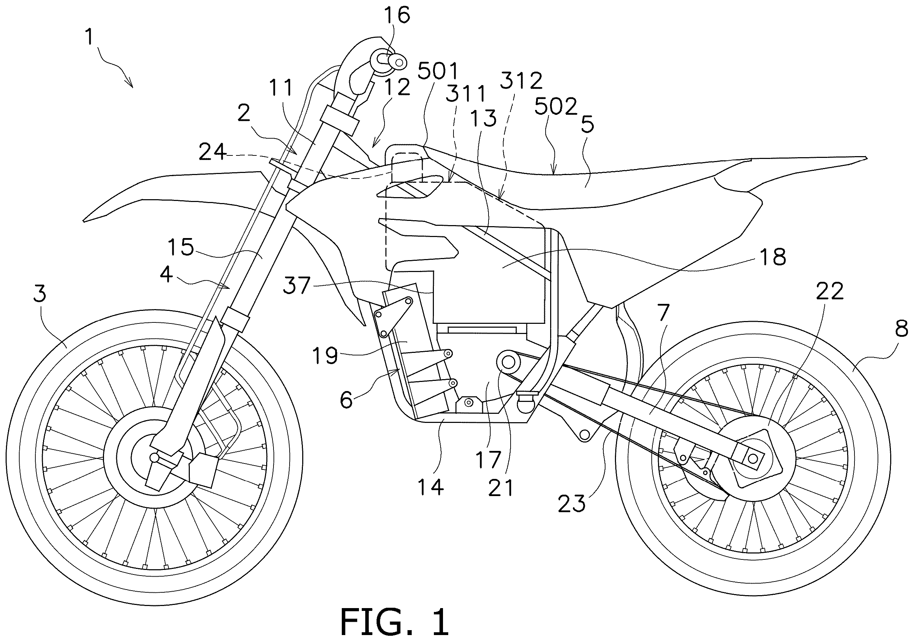

Hereinafter, an electric straddled vehicle according to an embodiment will be described with reference to the drawings. FIG. 1 is a side view of an electric straddled vehicle 1 according to an embodiment. The electric straddled vehicle 1 according to the present embodiment is, for example, an off-road motorcycle. As shown in FIG. 1, the electric straddled vehicle 1 includes a body frame 2, a front wheel 3, a steering device 4, a seat 5, a power unit 6, a swing arm 7, and a rear wheel 8. The body frame 2 includes a head pipe 11 and a main frame 12. In the following description, the front, rear, left and right directions respectively refer to the front, rear, left and right directions as seen by a rider sitting on the seat 5.

The main frame 12 is disposed rearward of the head pipe 11. The main frame 12 is connected to the head pipe 11. The main frame 12 supports the power unit 6. The main frame 12 includes an upper frame 13 and a lower frame 14. The upper frame 13 extends rearward from the head pipe 11. The lower frame 14 is disposed under the upper frame 13. The lower frame 14 extends downward from the head pipe 11.

The steering device 4 includes a front fork 15 and a handlebar 16. The front fork 15 rotatably supports the front wheel 3. The front fork 15 is supported by the head pipe 11 so as to be turnable left and right. The handlebar 16 is connected to the upper end of the front fork 15. The seat 5 is disposed behind the head pipe 11.

The power unit 6 is disposed under the seat 5. The power unit 6 is disposed between the front wheel 3 and the rear wheel 8. The power unit 6 is supported by the main frame 12. The power unit 6 includes a motor 17. The motor 17 drives the rear wheel 8. The swing arm 7 is supported by the motor 17 so as to be swingable up and down. However, the swing arm 7 may be supported by the main frame 12 so as to be swingable up and down.

The swing arm 7 rotatably supports the rear wheel 8. The motor 17 includes a front sprocket 21. The rear wheel 8 includes a rear sprocket 22. A drive chain 23 is wound around the front sprocket 21 and the rear sprocket 22. The motor 17 rotates the front sprocket 21 to rotate the rear wheel 8.

The power unit 6 includes a battery 18 and a motor control unit 19. The battery 18 supplies electric power to the motor 17. The battery 18 is disposed under the seat 5. At least a portion of the battery 18 is disposed rearward of the front end 501 of the seat 5. At least a portion of the battery 18 overlaps with the seat 5 in the vertical direction. The battery 18 is disposed behind the head pipe 11. The battery 18 is disposed inside the upper frame 13 in the left-right direction of the vehicle. The battery 18 overlaps the upper frame 13 as seen in a vehicle side view. The battery 18 is disposed above the motor 17. The battery 18 overlaps with the motor 17 in the vertical direction. The battery 18 is attached to the motor 17.

The motor control unit 19 controls the motor 17. The motor control unit 19 includes a control circuit such as an inverter circuit. The motor control unit 19 controls the electric power supplied to the motor 17. As seen in the vehicle side view, the motor control unit 19 has a shape that is longer in the vertical direction than the motor 17. The motor control unit 19 is disposed in front of the motor 17 and the battery 18. The motor control unit 19 overlaps with the motor 17 and the battery 18 in the front-rear direction of the vehicle. The motor control unit 19 is supported by the lower frame 14. The motor control unit 19 is attached to the motor 17.

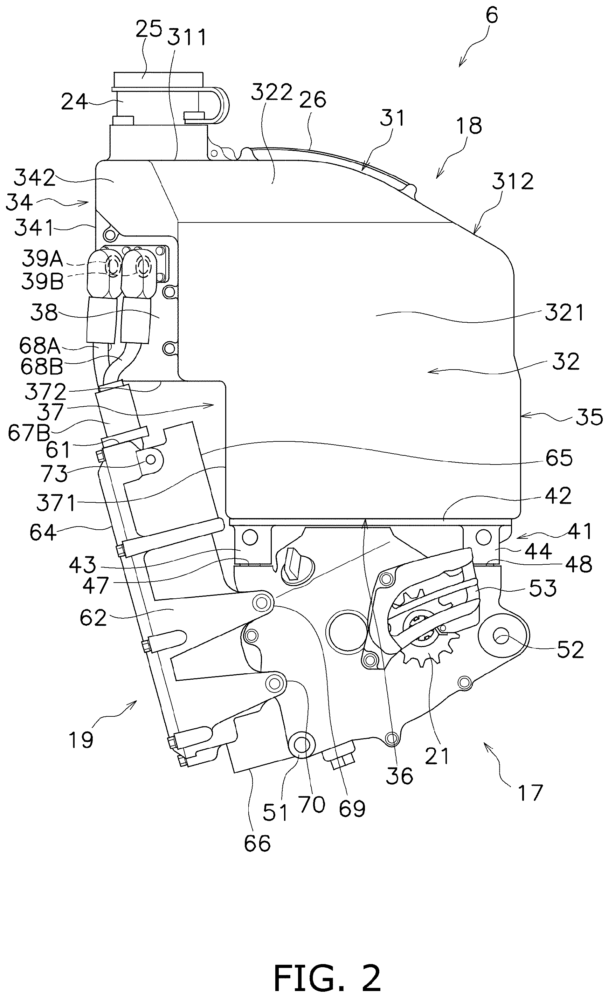

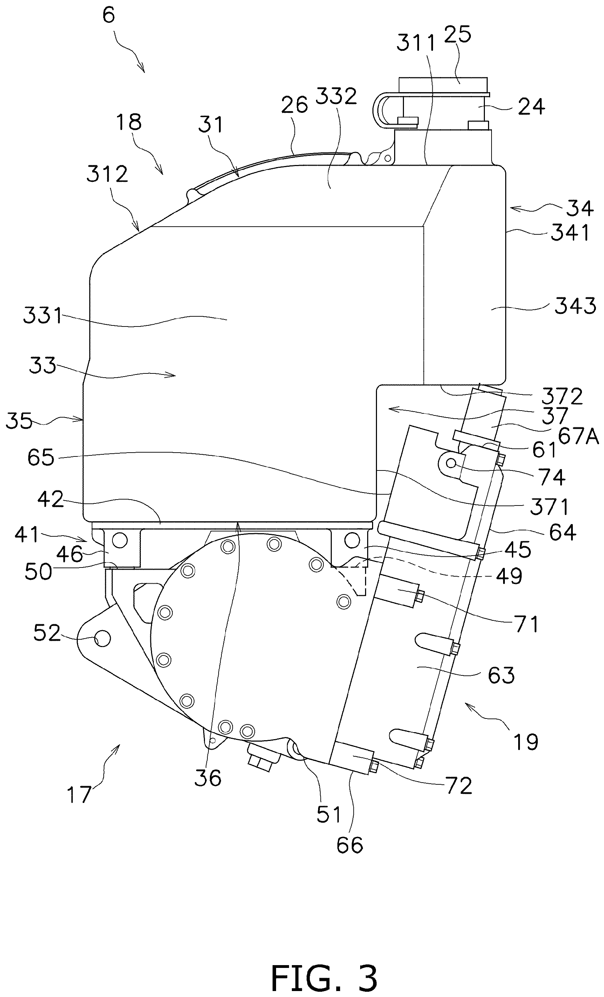

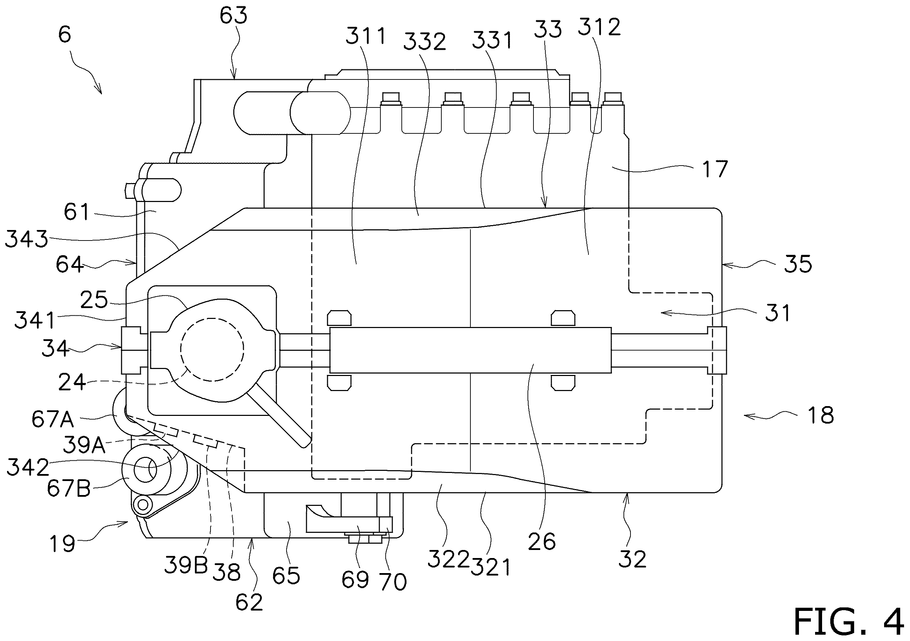

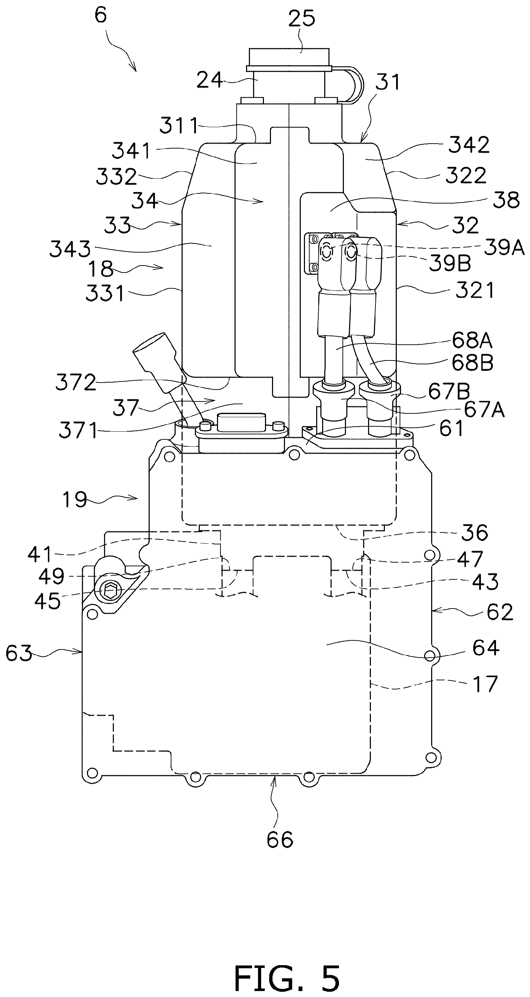

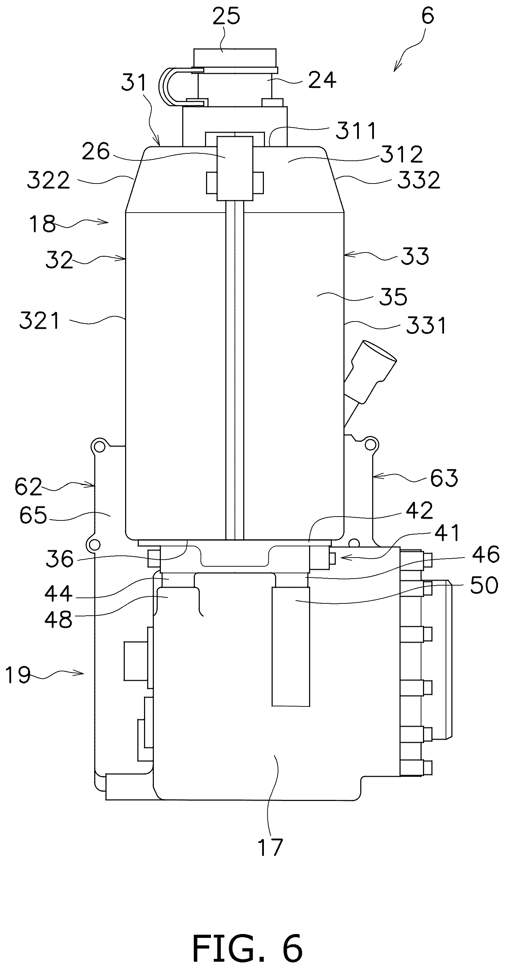

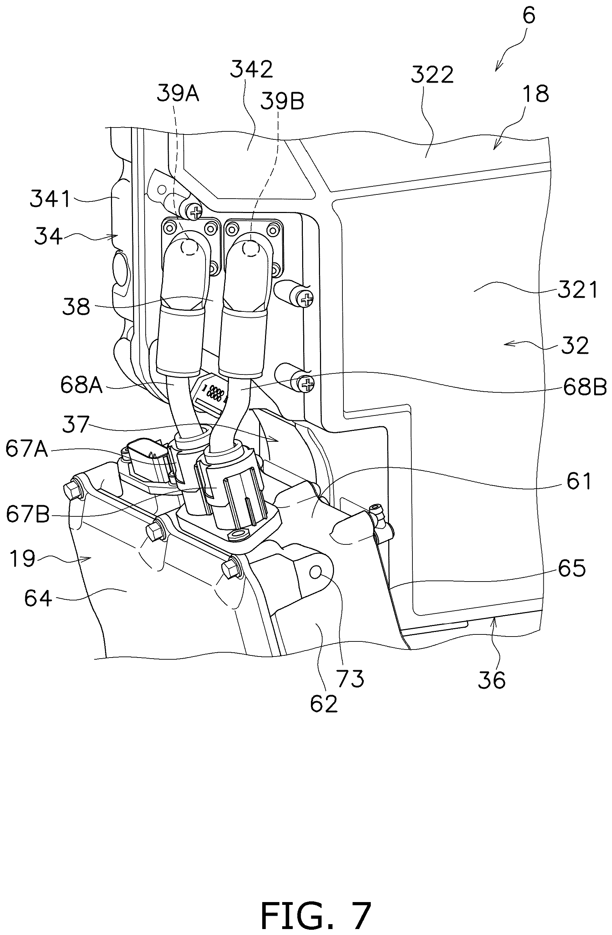

FIG. 2 is a left side view of the power unit 6. FIG. 3 is a right side view of the power unit 6. FIG. 4 is a top view of the power unit 6. FIG. 5 is a front view of the power unit 6. FIG. 6 is a rear view of the power unit 6. FIG. 7 is an enlarged perspective view of the power unit 6. As shown in FIG. 4, the battery 18 has a shape that is longer in the front-rear direction of the vehicle than in the left-right direction of the vehicle. As shown in FIGS. 5 and 6, the battery 18 has a shape that is longer in the vertical direction than in the left-right direction of the vehicle. The battery 18 includes an upper surface 31, a first side surface 32, a second side surface 33, a front surface 34, a rear surface 35, and a bottom surface 36.

The upper surface 31 includes a front upper surface 311 and an upper inclined surface 312. As shown in FIG. 1, the front upper surface 311 is disposed below the seat surface 502 of the seat 5. The front upper surface 311 has a flat shape. The charging socket 24 protrudes upward from the front upper surface 311. A charging plug for charging the battery 18 is connected to the charging socket 24 from outside the vehicle. A socket cap 25 is removably attached to the charging socket 24. The upper inclined surface 312 is disposed behind the front upper surface 311. As shown in FIG. 2, the upper inclined surface 312 is inclined diagonally downward and rearward as seen in the vehicle side view. As shown in FIG. 1, the upper inclined surface 312 is disposed under the seat 5 and supports the front end 501 of the seat 5.

The grip portion 26 is attached to the upper surface 31. The grip portion 26 is disposed behind the charging socket 24. The grip portion 26 extends in the front-rear direction of the vehicle along the upper surface 31. The grip portion 26 has a belt-like shape. The battery 18 is removed from the electric straddled vehicle 1 by being pulled out upward from the electric straddled vehicle 1. The battery 18 is attached to the electric straddled vehicle 1 by being inserted into the electric straddled vehicle 1 from above the electric straddled vehicle 1. The grip portion 26 makes it easy to attach and detach the battery 18.

The first side surface 32 is the left side surface of the battery 18, and the second side surface 33 is the right side surface of the battery 18. However, the first side surface 32 and the second side surface 33 may be reversed. The first side surface 32 includes a first main surface 321 and a first inclined side surface 322. The first main surface 321 extends upward from the bottom surface 36. The first main surface 321 extends forward from the rear surface 35. The first inclined side surface 322 is disposed above the first main surface 321. The first inclined side surface 322 is disposed between the upper surface 31 and the first main surface 321. The first inclined side surface 322 is inclined upward and inward.

The second side surface 33 includes a second main surface 331 and a second inclined side surface 332. The second main surface 331 extends upward from the bottom surface 36. The second main surface 331 extends forward from the rear surface 35. The second inclined side surface 332 is disposed above the second main surface 331. The second inclined side surface 332 is disposed between the upper surface 31 and the second main surface 331. The second inclined side surface 332 is inclined upward and inward. As shown in FIG. 5, the first inclined side surface 322 and the second inclined side surface 332 have a shape that tapers upward as seen in a vehicle front view.

The front surface 34 includes a central front surface 341, a first inclined front surface 342, and a second inclined front surface 343. The central front surface 341 extends in the vertical direction. The central front surface 341 extends in the left-right direction of the vehicle. The first inclined front surface 342 is located on one side of the central front surface 341 in the left-right direction of the vehicle. The second inclined front surface 343 is located on the other side of the central front surface 341 in the left-right direction of the vehicle.

In the present embodiment, the first inclined front surface 342 is located to the left of the central front surface 341, and the second inclined front surface 343 is located to the right of the central front surface 341. However, the first inclined front surface 342 and the second inclined front surface 343 may be disposed in the opposite direction. The first inclined front surface 342 is inclined forward and inward. The second inclined front surface 343 is inclined forward and inward. As shown in FIG. 4, the first inclined front surface 342 and the second inclined front surface 343 have a shape that tapers toward the front as seen in the vehicle front view.

The rear surface 35 extends in the vertical direction. The rear surface 35 extends in the left-right direction of the vehicle. The bottom surface 36 extends in the front-rear direction of the vehicle. The bottom surface 36 extends in the left-right direction of the vehicle. The bottom surface 36 has a flat shape.

The battery 18 includes a step portion 37. The step portion 37 is disposed in front of the bottom surface 36. The step portion 37 is disposed below the front surface 34. The step portion 37 is recessed upward from the bottom surface 36. The step portion 37 is recessed rearward from the front surface 34. The step portion 37 extends in the left-right direction of the vehicle from the first main surface 321 to the second main surface 331. The step portion 37 includes a first surface 371 and a second surface 372. The first surface 371 extends upward from the bottom surface 36. The second surface 372 extends forward from the first surface 371 towards the front surface 34.

The battery 18 includes a recess 38. The recess 38 is disposed between the front surface 34 and the first side surface 32. The recess 38 is recessed rearward from the front surface 34. The recess 38 is recessed laterally inward from the first side surface 32. The recess 38 is disposed above the step portion 37. The recess 38 is disposed under the first inclined front surface 342. The recess 38 is disposed in front of the first main surface 321.

First connectors 39Aand 39B are disposed in the recess 38. The first connectors 39A and 39B are electrically connected to the motor control unit 19. The first connectors 39A and 39B are disposed above the bottom surface 36 of the battery 18. The first connectors 39A and 39B protrude from the side surfaces of the recess 38.

The battery 18 is attached to the motor 17 via a mount member 41. The mount member 41 includes a mount base 42 and a plurality of mount stands 43-46. The mount base 42 has a flat shape. The bottom surface 36 of the battery 18 is disposed on the mount base 42. The plurality of mount stands 43-46 protrude downward from the mount base 42. The plurality of mount stands 43-46 are attached to the motor 17. For example, the plurality of mount stands 43-46 are secured to the motor 17 by bolts.

The motor 17 is disposed under the battery 18. The motor 17 is disposed under the mount member 41. The motor 17 includes a plurality of battery supports 47-50. The plurality of battery support 47-50 support the battery 18 via the mount member 41. The plurality of mount stands 43-46 are disposed on the plurality of battery supports 47-50.

As shown in FIG. 1, the motor 17 is supported by the lower frame 14. As shown in Fig. 2, the motor 17 includes a frame fixing portion 51. The motor 17 is fixed to the lower frame 14 at the frame fixing portion 51. The motor 17 includes a pivot support 52. The pivot support 52 swingably supports the swing arm 7. A protective member 53 is attached to the side of the motor 17. The protective member 53 covers the front sprocket 21 from the lateral side.

The motor control unit 19 is disposed in front of the step portion 37 of the battery 18 and the motor 17. As shown in FIGS. 2 and 3, the motor control unit 19 is inclined obliquely upward and forward. The upper portion of the motor control unit 19 is disposed to face the step portion 37. In detail, the motor control unit 19 overlaps with the second surface 372 in the vertical direction. The motor control unit 19 overlaps with the first surface 371 in the front-rear direction of the vehicle. The motor control unit 19 includes an upper surface 61, a first side surface 62, a second side surface 63, a front surface 64, a rear surface 65, and a bottom surface 66.

The upper surface 61 of the motor control unit 19 is disposed to face the step portion 37 of the battery 18. The upper surface 61 is disposed in front of the first surface 371. The upper surface 61 is disposed under the second surface 372. Second connectors 67A and 67B are connected to the upper surface 61. The second connectors 67A and 67B are electrically connected to the motor control unit 19.

The second connectors 67A and 67B protrude upward from the upper surface 61. The second connectors 67A and 67B are disposed above the bottom surface 36 of the battery 18. The second connectors 67A and 67B are disposed to face the step portion 37. The second connectors 67A and 67B overlap the first surface 371 in the front-rear direction of the vehicle. The second connectors 67A and 67B are connected to the first connectors 39A and 39B via cables 68A and 68B, respectively. In FIG. 4, the cables 68A and 68B are omitted for ease of understanding.

As shown in FIG. 2, the front surface 64 is inclined obliquely upward and forward as seen in the vehicle side view. The front surface 64 extends from above the bottom surface 36 of the battery 18 to below the bottom surface 36 of the battery 18. The front surface 64 is disposed rearward of the front surface 34 of the battery 18. The rear surface 65 is inclined obliquely upward and forward as seen in the vehicle side view. The rear surface 65 extends from above the bottom surface 36 of the battery 18 to below the bottom surface 36 of the battery 18.

The first side surface 62 is the left side surface of the motor control unit 19, and the second side surface 63 is the right side surface of the motor control unit 19. However, the first side surface 62 and the second side surface 63 may be reversed. The first side surface 62 of the motor control unit 19 is disposed laterally outward of the first side surface 32 of the battery 18. The second side surface 63 of the motor control unit 19 is disposed laterally outward of the second side surface 33 of the battery 18. That is, the motor control unit 19 is larger than the battery 18 in the left-right direction of the vehicle.

As shown in FIGS. 2 and 3, the motor control unit 19 includes first motor fixing portions 69 and 70 and second motor fixing portions 71 and 72. As shown in FIG. 2, the first motor fixing portions 69 and 70 are provided on the first side surface 62. As shown in FIG. 3, the second motor fixing portions 71 and 72 are provided on the second side surface 63. The motor control unit 19 is fixed to the motor 17 at first motor fixing portions 69 and 70 and second motor fixing portions 71 and 72. For example, the first motor fixing portions 69 and 70 and the second motor fixing portions 71 and 72 are each fixed to the motor 17 by a bolt.

The motor control unit 19 includes a first frame fixing portion 73 and a second frame fixing portion 74. As shown in FIG. 2, the first frame fixing portion 73 is provided on the first side surface 62. As shown in FIG. 3, the second frame fixing portion 74 is provided on the second side surface 63. The motor control unit 19 is fixed to the lower frame 14 at the first frame fixing portion 73 and the second frame fixing portion 74. For example, the first frame fixing portion 73 and the second frame fixing portion 74 are each fixed to the lower frame 14 by a bolt.

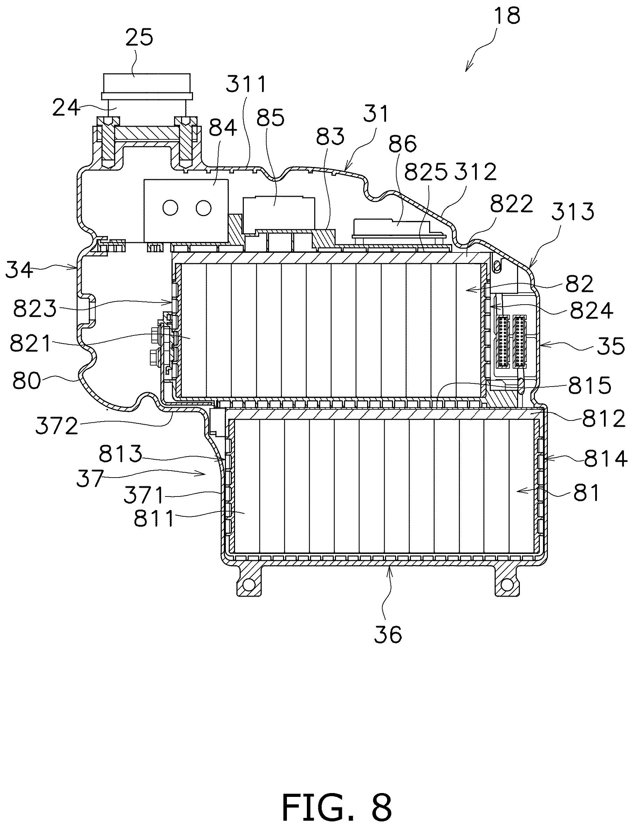

FIG. 8 shows the internal structure of the battery 18. As shown in FIG. 8, the battery 18 includes a battery case 80, a first battery module 81, and a second battery module 82. In FIG. 8, a part of the configuration of the battery 18, such as the battery case 80, is shown in cross section.

The first battery module 81 is disposed within the battery case 80. The first battery module 81 includes a plurality of first battery cells 811 and a first cell holder 812. The plurality of first battery cells 811 are separate from one another. The plurality of first battery cells 811 are integrated with one another by the first cell holder 812. In the drawings, only one of the plurality of first battery cells 811 is given the reference numeral 811, and the reference numerals of the other first battery cells 811 are omitted.

The second battery module 82 is a separate body from the first battery module 81. The second battery module 82 is disposed within the battery case 80. The second battery module 82 includes a plurality of second battery cells 821 and a second cell holder 822. The plurality of second battery cells 821 are separate from one another. The second battery cells 821 each have the same shape as the first battery cells 811. The plurality of second battery cells 821 are integrated with one another by the second cell holder 822. In the drawings, only one of the plurality of second battery cells 821 is given the reference numeral 821, and the reference numerals of the other second battery cells 821 are omitted. The number of the second battery cells 821 is the same as the number of the first battery cells 811.

The second battery module 82 is disposed above the first battery module 81. The second battery module 82 has the same shape as the first battery module 81. The second battery module 82 is disposed shifted forward relative to the first battery module 81. A front surface 823 of the second battery module 82 is disposed forward of a front surface 813 of the first battery module 81. A rear surface 824 of the second battery module 82 is disposed forward of a rear surface 814 of the first battery module 81.

The first battery module 81 is disposed behind the first surface 371. The upper surface 815 of the first battery module 81 is disposed at the same height as the second surface 372. A portion of the second battery module 82 is disposed above the second surface 372. The second battery module 82 overlaps with the second surface 372 in the vertical direction. The rear end 313 of the upper inclined surface 312 of the battery 18 is disposed rearward of the upper surface 825 of the second battery module 82. The rear end 313 of the upper inclined surface 312 of the battery 18 is disposed below the upper surface 825 of the second battery module 82.

A partition member 83 is disposed within the battery case 80. The partition member 83 divides the inside of the battery case 80 into upper and lower sections. Within the battery case 80, the first battery module 81 and the second battery module 82 are disposed below the partition member 83. Within the battery case 80, electronic components 84-86 for controlling the electric power of the battery 18 are disposed above the partition member 83. The electronic components 84-86 include, for example, relays, fuses, and communication modules.

In the electric straddled vehicle 1 according to the present embodiment described above, the motor control unit 19 is disposed in front of the motor 17 and the battery 18 and overlaps with the motor 17 and the battery 18 in the front-rear direction of the vehicle. Therefore, the motor control unit 19 can be disposed at a high position. This allows the first connectors 39A and 39B and the second connectors 67A and 67B, which electrically connect the motor control unit 19 and the battery 18, to be disposed at a high position. Furthermore, the battery 18 can be disposed at a lower position compared to when the motor control unit 19 is disposed under the battery 18. This allows the position of the center of gravity of the electric straddled vehicle 1 to be lowered.

Although one embodiment of the present invention has been described above, the present invention is not limited to the above embodiment, and various modifications are possible without departing from the gist of the invention.

The electric straddled vehicle 1 is not limited to an off-road motorcycle, but may be other vehicles such as a road sports vehicle, a scooter, or a moped. The structure of the electric straddled vehicle 1 is not limited to that of the above embodiment, and may be modified. For example, the shape of the body frame 2 may be changed.

The structure of the power unit 6 is not limited to that of the above embodiment and may be modified. For example, the number of first connectors and second connectors is not limited to two each, and may be one or more than two. The first connectors 39A and 39B may be directly connected to the second connectors 67A and 67B without using a cable.

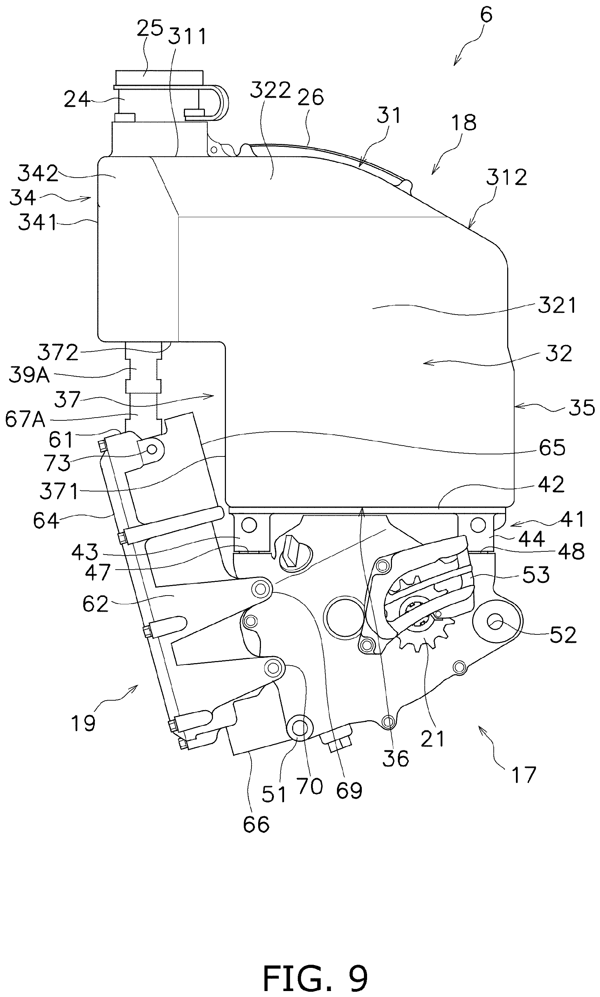

FIG. 9 is a side view of a power unit 6 according to a modified example. As shown in FIG. 9, the first connector 39A may be provided on the step portion 37. The first connector 39A may protrude downward from the second surface 372. The first connector 39A may be disposed directly above the second connector 67A. The first connector 39A may be inserted into the second connector 67A from above. In the modified example, similarly to the above embodiment, two first connectors and two second connectors may be provided.

The structure of the battery 18 is not limited to that of the above embodiment and may be modified. For example, the number of first battery cells 811 and the number of second battery cells 821 are not limited to those in the above embodiment and may be changed. The number of battery modules is not limited to two, but may be three or more. For example, the battery 18 may further include a third battery module. The third battery module, like the second battery module 82, may have the same shape as the first battery module 81 and be disposed shifted forward relative to the first battery module 81.

### INDUSTRIAL APPLICABILITY

According to the present invention, in an electric straddled vehicle, the electrical connection between the motor control unit and the battery is disposed in a high position, and the position of the center of gravity of the vehicle is lowered.

### REFERENCE SIGNS LIST

3: Front wheel
5: Seat
8: Rear wheel (wheel)
11: Head pipe
15: Front fork
17: Motor
18: Battery
19: Motor control unit
36: Bottom surface
39A, 39B: First connector
37: Step portion
67A, 67B: Second connector
68A, 68B: Cable
80: Battery case
81: First battery module
82: Second battery module
312: Upper inclined surface
371: First surface
372: Second surface
811: First battery cell
821: Second battery cell

## Claims

1. An electric straddled vehicle comprising:
a wheel;
a motor to drive the wheel;
a battery disposed above the motor; and
a motor control unit that is disposed in front of the motor and the battery and overlaps with the motor and the battery in a front-rear direction of the vehicle.

2. The electric straddled vehicle according to claim 1, wherein
the battery includes a bottom surface and a first connector electrically connected to the motor control unit, and
the first connector is disposed above the bottom surface of the battery.

3. The electric straddled vehicle according to claim 1 or 2, wherein
the motor control unit includes a second connector electrically connected to the battery, and
the second connector is disposed above the bottom surface of the battery.

4. The electric straddled vehicle according to claim 3, wherein
the battery includes a step portion disposed in front of the bottom surface and recessed upward, and
the second connector is disposed to face the step portion.

5. The electric straddled vehicle according to claim 3, further comprising a cable connecting the first connector and the second connector.

6. The electric straddled vehicle according to claim 4, wherein the first connector is provided on the step portion.

7. The electric straddled vehicle according to claim 6, wherein the first connector is inserted into the second connector from above.

8. The electric straddled vehicle according to claim 1, wherein
the battery includes a step portion disposed in front of the bottom surface and recessed upward,
the step portion includes
a first surface extending upward from the bottom surface and
a second surface extending forward from the first surface, and
the motor control unit overlaps with the second surface in a vertical direction.

9. The electric straddled vehicle according to claim 1, wherein
the battery includes a step portion disposed in front of the bottom surface and recessed upward,
the step portion includes
a first surface extending upward from the bottom surface and
a second surface extending forward from the first surface, and
the motor control unit overlaps with the first surface in the front-rear direction of the vehicle.

10. The electric straddled vehicle according to claim 1, wherein the battery is attached to the motor.

11. The electric straddled vehicle according to claim 1, further comprising:
a front wheel;
a front fork that rotatably supports the front wheel;
a head pipe supporting the front fork so as to be rotatable left and right; and
a seat disposed behind the head pipe, wherein
the battery is disposed under the seat.

12. The electric straddled vehicle according to claim 11, wherein
the battery includes
a battery case,
a first battery module disposed in the battery case and including a plurality of first battery cells, and
a second battery module that is disposed within the battery case, includes a plurality of second battery cells, and is disposed above the first battery module,
the second battery module is disposed so as to be shifted forward with respect to the first battery module.

13. The electric straddled vehicle according to claim 12, wherein a rear surface of the second battery module is disposed forward of a rear surface of the first battery module.

14. The electric straddled vehicle according to claim 12, further comprising
a seat disposed above the battery, wherein
at least a portion of the battery is disposed rearward of a front end of the seat.

15. The electric straddled vehicle according to claim 12, wherein the second battery module has a same shape as the first battery module.

16. The electric straddled vehicle according to claim 12, wherein an upper surface of the battery includes an inclined surface that supports a front end of the seat.

17. The electric straddled vehicle according to claim 1, wherein the battery supplies electric power to the motor.

18. The electric straddled vehicle according to claim 1, wherein the motor control unit controls the motor.
